# EUROPEAN PATENT APPLICATION

(11) **EP 3 196 166 A1**
(43) Date of publication of application: **26.07.2017**
(21) Application number: 15842599.1
(22) Date of filing: 16.09.2015
(51) Int. Cl.: C01F 5/14, C08K 9/02, C08L 101/00

(54) **COLLOIDAL-SILICA-COATED MAGNESIUM HYDROXIDE**

(30) Priority: 18.09.2014 JP 2014189943
(71) Applicant: Kyowa Chemical Industry Co., Ltd, Takamatsu-shi, Kagawa 761-0113 (JP)
(72) Inventor: OOHORI, Kohei, Sakaide-shi Kagawa 762-0012 (JP); MIYATA, Shigeo, Kitakyushu-shi Fukuoka 807-1123 (JP)
(74) Representative: J A Kemp
(86) International application number: PCT/JP2015/077226
(87) International publication number: WO 2016/043343

(57) **Abstract**

Magnesium hydroxide having low glossiness and acid resistance which is required for coatability.

The magnesium hydroxide is coated magnesium hydroxide comprising magnesium hydroxide and colloidal silica coating the surface thereof, wherein
(A) the coating amount of colloidal silica is 0.1 to 20.0 wt% in terms of SiO₂ based on 100 wt% of magnesium hydroxide; and
(B) the coated magnesium hydroxide has a long diameter (width) of 0.5 to 20 µm, a thickness of 0.01 to 0.5 µm and an aspect ratio of not less than 10.

## Description

### TECHNICAL FIELD

The present invention relates to coated magnesium hydroxide whose surface has been uniformly coated with colloidal silica, a production process therefor, a resin composition comprising the coated magnesium hydroxide and having low glossiness and excellent acid resistance, and a molded article thereof.

### BACKGROUND ART

Magnesium hydroxide is one of a few materials having the highest level of nontoxicity and widely used in acid suppressants (gastric acid neutralizers), stabilizers for vinyl chloride, laxative agents, flue-gas desulfurizers, magnesia fertilizers and food additives (magnesium reinforcing agents). As for use of magnesium hydroxide as an additive to a resin, its utility value especially for resin products which are existent close to people's lives is rated high as it is safe without producing a toxic gas. When magnesium hydroxide is mixed with a resin, the characteristic properties such as flame retardancy (heat absorptivity at the time of thermal decomposition) and mechanical properties of the resulting resin composition are greatly influenced by the crystal form of magnesium hydroxide. Therefore, studies have been made on the control of the crystal form.

Patent Document 1 (WO2011/073766) discloses magnesium hydroxide having a high aspect ratio and a fully developed width. This magnesium hydroxide is useful as not only a flame retardant but also a resin strengthening or reinforcing agent which is superior to talc and mica due to its characteristic form and high orientation in a resin. It is known that a resin composition comprising this magnesium hydroxide is excellent in flexural modulus and impact strength in addition to heat resistance. Since the crystal face parallel to the width direction of this magnesium hydroxide having a high aspect ratio is wide and smooth, a resin composition comprising this has a more shiny appearance than that of a resin alone. Therefore, a degloss is required in application fields in which non-glossiness is required, such as auto interior parts, and it is hard to say that this magnesium hydroxide is economically excellent.

Further, even when a resin composition comprising magnesium hydroxide is applied to an auto exterior part such as a bumper or fender, as magnesium hydroxide itself readily reacts with an acid, water is produced by carrying out a post-treatment with an acidic paint, thereby damaging the appearance due to the swelling of a coating film caused by this. Although Patent Document 1 does not mention the swelling of the coating film, if acid resistance is provided to magnesium hydroxide particles having a high aspect ratio, the application range of the magnesium hydroxide can be expected to spread to auto exterior parts and the like.

This magnesium hydroxide having a high aspect ratio is useful as a resin strengthening or reinforcing material, and a resin composition comprising this magnesium hydroxide is excellent in flexural modulus and impact strength in addition to heat resistance. Meanwhile, since the crystal face of this magnesium hydroxide is wide and smooth, a resin composition comprising this magnesium hydroxide has a very shiny appearance. Therefore, it is not suitable for use in auto interior parts which require non-glossiness.

Further, since magnesium hydroxide itself readily reacts with an acid, when an acidic paint is used, swelling is caused by the production of water, thereby damaging the appearance.
(Patent Document 1) WO2012/050222

### DISCLOSURE OF THE INVENTION

It is an object of the present invention to provide magnesium hydroxide having low glossiness and acid resistance which is required for coatability by controlling high gloss which is one of the characteristic features of magnesium hydroxide having a high aspect ratio.

The inventors of the present invention found that acid resistance is improved by coating the surface of magnesium hydroxide having a high aspect ratio, which has a wide and smooth crystal face and shows a very shiny appearance when it is contained in a resin, with colloidal silica uniformly and finely and that fine irregularities are produced on the surface by the colloidal silica, thereby making it possible to provide low glossiness due to the scattering of visible light.

The present invention is based on the finding that, out of conventionally known coating agents, colloidal silica is suitable for controlling glossiness by coating the surface of magnesium hydroxide having a high aspect ratio.

Further, since the obtained colloidal silica coated magnesium hydroxide has characteristic features inherent in magnesium hydroxide having a high aspect ratio, when it is added to various resins, a high flexural modulus and impact resistance can be provided.

That is, the present invention is coated magnesium hydroxide comprising magnesium hydroxide and colloidal silica coating the surface thereof, wherein
(A) the coating amount of colloidal silica is 0.1 to 20 wt% in terms of SiO₂ based on 100 wt% of magnesium hydroxide; and
(B) the coated magnesium hydroxide has a long diameter (width) of 0.5 to 20 µm, a thickness of 0.01 to 0.5 µm and an aspect ratio of not less than 10.

The present invention is a resin composition comprising 100 parts by weight of a resin and 0.1 to 200 parts by weight of the above coated magnesium hydroxide and a molded article thereof.

The present invention is a process for producing the above coated magnesium hydroxide, comprising the steps of:
(i) preparing slurry containing magnesium hydroxide having a long diameter (width) of 0.5 to 20 µm, a thickness of 0.01 to 0.5 µm and an aspect ratio of not less than 10 dispersed in water; and
(ii) adding a colloidal silica aqueous solution to the slurry to ensure that the content of colloidal silica becomes 0.1 to 20 wt% in terms of SiO₂ based on 100 w% of magnesium hydroxide.

### BRIEF DESCRIPTION OF THE DRAWINGS

Fig. 1 shows an SEM photo of coated magnesium hydroxide (20,000 magnifications); and
Fig. 2 shows an SEM photo of coated magnesium hydroxide (100,000 magnifications).

### BEST MODE FOR CARRYING OUT THE INVENTION

The present invention will be described in detail hereinunder.

### <coated magnesium hydroxide>

In the coated magnesium hydroxide of the present invention, the coating amount of colloidal silica is 0.1 to 20 wt%, preferably 0.5 to 20 wt%, more preferably 2 to 10 wt% in terms of SiO₂ based on 100 wt% of magnesium hydroxide.

The long diameter (width) of the coated magnesium hydroxide of the present invention is 0.5 to 20 µm, preferably 1 to 10 µm. The thickness thereof is 0.01 to 0.5 µm, preferably 0.01 to 0.1 µm. The long diameter and the thickness are obtained from arithmetic averages of measurement values of 10 arbitrary crystallites in a SEM photo of magnesium hydroxide.

The aspect ratio (long diameter/thickness) of magnesium hydroxide is not less than 10, preferably not less than 20, more preferably not less than 30, particularly preferably not less than 50. The aspect ratio is a value obtained by dividing the arithmetic average of long diameter by the arithmetic average of thickness.

The long diameter is equivalent to 2x when the length of one side of the hexagonal crystal of hexagonal magnesium hydroxide is represented by "x". When the thickness is represented by "y", the aspect ratio is equivalent to 2x/y.

The secondary particle diameter of the coating colloidal silica is 0.001 to 0.5 µm, preferably 0.004 to 0.3 µm, more preferably 0.004 to 0.2 µm.

The coated magnesium hydroxide of the present invention is preferably surface treated when it is combined with a resin. Examples of the surface treating agent include aliphatic amines, fatty acid amides, cationic surfactants, anionic surfactants such as higher fatty acid, phosphoric acid esters, silane coupling agents, titanate coupling agents, aluminum coupling agents and silicone. The surface treating agent is used in an amount of preferably 0.1 to 5 wt% based on magnesium hydroxide having a high aspect ratio to carry out wet or dry processing. The wet processing is that the coated magnesium hydroxide is dispersed in a solvent such as water or alcohol and the surface treating agent is added to the obtained dispersion under agitation. The dry processing is that the surface treating agent is added to powder coated magnesium hydroxide under agitation with a high-speed stirrer such as a Henschel mixer.

### <resin composition>

The resin composition of the present invention comprises 100 parts by weight of a resin and 0.1 to 200 parts by weight of the coated magnesium hydroxide. The content of the coated magnesium hydroxide is preferably 1 to 100 parts by weight, more preferably 2 to 50 parts by weight based on 100 parts by weight of the resin.

A thermoplastic resin may be used as the resin. Examples of the thermoplastic resin include polyethylene, copolymers of ethylene and another α-olefin, copolymer of ethylene and vinyl acetate, copolymer of ethylene and ethyl acrylate, copolymer of ethylene and methyl acrylate, polypropylene, copolymers of propylene and another α-olefin, polybutene-1, poly4-methylpentene-1, polystyrene, copolymer of styrene and acrylonitrile, copolymer of ethylene and propylene diene rubber, copolymer of ethylene and butadiene, polyvinyl acetate, polyvinyl alcohol, polyacrylate, polymethacrylate, polyurethane, polyester, polyether, polyamide, ABS, polycarbonate and polyphenylene sulfide.

A thermosetting resin may also be used as the resin. Examples of the thermosetting resin include phenol resin, melamine resin, epoxy resin, unsaturated polyester resin and alkyd resin.

Other examples of the resin include EPDM, SBR, NBR, butyl rubber, chloroprene rubber, isoprene rubber, chlorosulfonated polyethylene rubber, silicone rubber, fluorine rubber, chlorinated butyl rubber, brominated butyl rubber, epichlorohydrin rubber and chlorinated polyethylene.

The resin composition of the present invention may comprise a conventionally known reinforcing agent such as talc, mica, glass fiber or basic magnesium sulfate fiber besides the coated magnesium hydroxide of the present invention. The amount of the reinforcing agent is 1 to 50 parts by weight based on 100 parts by weight of the resin.

Besides the reinforcing agent, other commonly used additives, for example, an antioxidant, ultraviolet absorbent, lubricant, degloss such as particulate silica, pigment such as carbon black, bromine-based or phosphoric acid ester-based flame retardant, zinc stannate, alkali metal salt of stannic acid, flame retarding aid such as carbon powder, and filler such as calcium carbonate may be suitably selected and added.

Based on 100 parts by weight of the resin, 0.01 to 5 parts by weight of an antioxidant, 0.01 to 5 parts by weight of an ultraviolet absorbent, 0.1 to 5 parts by weight of a lubricant, 0.01 to 5 parts by weight of a degloss, 0.01 to 5 parts by weight of a pigment, 0.1 to 50 parts by weight of a flame retardant, 0.01 to 10 parts by weight of a flame retarding aid and 1 to 50 parts by weight of a filler may be added.

The method of mixing and kneading together the resin and the coated magnesium hydroxide of the present invention is not particularly limited if both materials can be uniformly mixed together. For example, they are mixed and kneaded together by means of a single-screw or double-screw extruder, roll or Banbury mixer. The molding method is not particularly limited and molding means known per se may be arbitrarily employed according to the types of the resin and the rubber and the type of a desired molded article. Examples of the molding method include injection molding, extrusion molding, blow molding, press molding, rotational molding, calendering, sheet forming, transfer molding, lamination molding and vacuum molding.

The glossiness of the resin composition of the present invention is preferably 30 to 40, more preferably 35 to 40 when 6 parts by weight of the coated magnesium hydroxide is mixed with 100 parts by weight of the resin. The glossiness of the resin composition was evaluated by 60° mirror surface glossiness in accordance with JIS. Z. 8741.

### (production process of coated magnesium hydroxide>

The coated magnesium hydroxide of the present invention may be produced by the following steps (i) and (ii).

### (step (i))

The step (i) is to prepare slurry containing raw material magnesium hydroxide having a long diameter (width) of 0.5 to 20 µm, a thickness of 0.01 to 0.5 µm and an aspect ratio of not less than 10 dispersed in water.

Since the form of the coated magnesium hydroxide depends on the form of the raw material magnesium hydroxide, raw material magnesium hydroxide having an external form close to a form having a desired aspect ratio is preferably used. That is, as the aspect ratio of the raw material magnesium hydroxide is higher, coated magnesium hydroxide having a higher aspect ratio can be produced. Magnesium hydroxide having a high aspect ratio can be produced by the process described in WO2012/050222.

That is, the raw material magnesium hydroxide having a high aspect ratio can be produced in the presence of a monovalent organic acid, an alkali metal salt of a monovalent organic acid or an ammonium salt of a monovalent organic acid when magnesium hydroxide is produced by hydrothermally treating slurry coprecipitated by adding an alkali to a water-soluble magnesium salt.

The long diameter of the raw material magnesium hydroxide is preferably 0.5 to 20 µm, more preferably 1 to 10 µm. The thickness thereof is preferably 0.01 to 0.5 µm, more preferably 0.01 to 0.1 µm. The long diameter and the thickness are obtained by arithmetic averages of the measurement values of 10 arbitrary crystallites in a SEM photo of magnesium hydroxide.

The aspect ratio (long diameter/thickness) of the raw material magnesium hydroxide is preferably not less than 10, more preferably not less than 20, much more preferably not less than 30, particularly preferably not less than 50. The aspect ratio is a value obtained by dividing the arithmetic average of width by the arithmetic average of thickness.

The BET specific surface area of the raw material magnesium hydroxide is preferably 1 to 100 m²/g, more preferably 2 to 70 m²/g, much more preferably 3 to 50 m²/g.

### (step (ii))

The step (ii) is to coat the surface of the raw material magnesium hydroxide with colloidal silica by adding a colloidal silica aqueous solution to the slurry obtained in the step (i). That is, the surface of the positively-charged raw material magnesium hydroxide obtained in the step (i) is coated by the adsorption of negatively-charged colloidal silica thereto.

The amount of colloidal silica is preferably 0.1 to 20 wt%, more preferably 0.5 to 20 wt%, much more preferably 2 to 10 wt% in terms of SiO₂ based on 100 wt% of magnesium hydroxide. The secondary particle diameter of the coating colloidal silica is preferably 0.001 to 0.5 µm, more preferably 0.005 to 0.3 µm.

Coating is preferably carried out by adding the colloidal silica aqueous solution to the slurry under agitation by keeping the temperature at preferably 70 to 90°C, more preferably 80 to 90°C. The agitation time is preferably 10 to 30 minutes.

### EXAMPLES

The following examples are given to further illustrate the present invention. In the examples, physical properties were measured by the following methods.

### (a) Glossiness of resin composition

As for the glossiness of the resin composition, the 60° mirror surface glossiness was measured in accordance with JIS. Z. 8741.

### (b) Flame retardancy of resin composition

As for the flame retardancy of the resin composition, the nonflammability of the resin composition was measured based on UL94 standards.

### (c) Flexural modulus of resin composition

The flexural modulus of the resin composition was measured in accordance with JIS. K. 7171.

### (d) Acid resistance of coated magnesium hydroxide

Acid resistance was measured at a pH of 4.0 and a temperature of 32°C by using the pH STAT of DKK-Toa Corporation as follows.

20 mL of ethanol and a rotor kept at 32°C were put into a 50 mL beaker kept warm in a drier machine (32°C) and immersed in a thermostat oven (32°C) to start stirring. After one minute, 0.1 g of a sample was injected. One minute after the injection of the sample, 20 mL of water kept at 32 °C was injected and a set of a pH meter electrode and a burette was immersed in the beaker. One minute after the injection of water, titration with 0.1 N HCl was started to measure T₁₅ (minutes). T₁₅ (minutes) is a time required for the consumption of 5.15 mL of 0.1 mol/L HCl corresponding to 15 mol% of magnesium hydroxide added to the sample after the start of titration. As T₁₅ (minutes) is longer, acid resistance becomes more excellent.

### Example 1

3.4 L of a 2 mol/L sodium hydroxide aqueous solution (30°C) was added to 4 L of a mixed aqueous solution of magnesium chloride which is an extra pure reagent and sodium acetate (Mg = 1.0 mol/L, sodium acetate = 0.5 mol/L, 30°C) under agitation to carry out a co-precipitation reaction in accordance with the method described in Patent Document 1 (WO2011/073766). 1 L of this reaction product was sampled to carry out a hydrothermal treatment in an autoclave at 160°C for 5 hours. After the obtained product was cooled to 100°C or lower, it was taken out from the autoclave, filtered, rinsed, dried and pulverized to obtain a magnesium hydroxide power sample 1. The aspect ratio of the obtained powder is shown in Table 1.

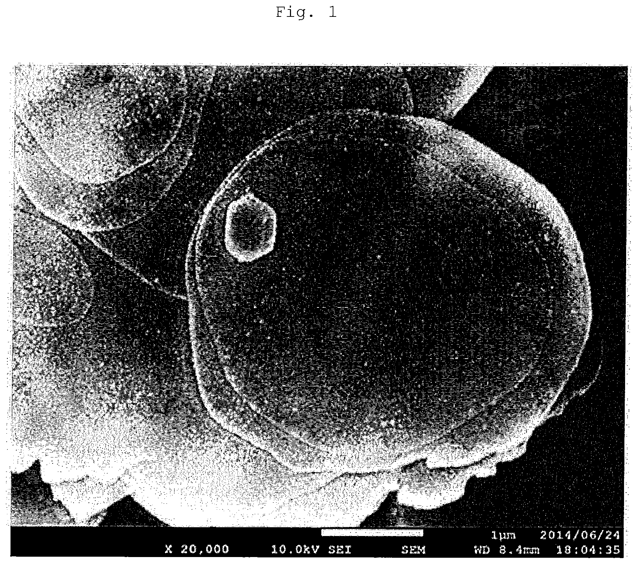

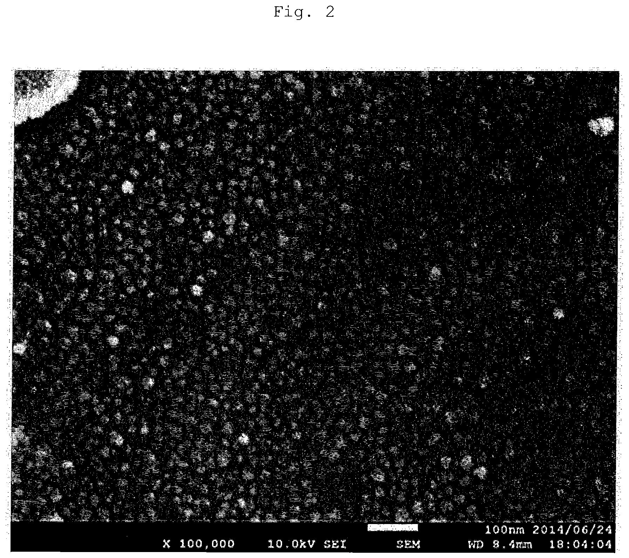

Then, slurry was prepared by emulsifying the powder sample 1 in water to ensure that the solid content became 30 g/L and the amount of the obtained liquid became 1.55 kL and heated at 80°C under agitation, and an aqueous solution of colloidal silica (Cataloid SI-30 (of JGC C&C Ltd. , average particle diameter of 12 nm, SiO₂ concentration of 30 wt%) was added to the above emulsion slurry in an amount of 2.0 wt% in terms of SiO₂ based on 100 wt% of magnesium hydroxide and kept at 80°C for 20 minutes. Then, stearic acid amide (ALFLOW S-10 (of NOF Corporation)) was injected in an amount of 1.5 wt% based on 100 wt% of magnesium hydroxide, kept at 80°C for 20 minutes, filtered, rinsed and dried to obtain a powder sample 2. When the obtained powder was observed through SEM, colloidal silica was uniformly adhered to the surfaces of primary particles (Fig. 1, Fig. 2). The aspect ratio of the obtained powder is shown in Table 1.

### Example 2

A powder sample 3 was obtained in the same manner as in Example 1 except that colloidal silica was added in an amount of 4.0 wt% in terms of SiO₂ based on 100 wt% of magnesium hydroxide. The aspect ratio of the obtained powder is shown in Table 1.

### Example 3 (preparation of resin composition)

6 parts by weight of the powder sample 2 prepared in Example 1, 100 parts by weight of polypropylene and 12 parts by weight of talc were mixed together and melt kneaded together at about 180°C by using a double-screw extruder to prepare a pellet. A test specimen was produced from the obtained pellet at about 200°C by means of an injection molding machine to measure its physical properties. The results are shown in Table 2.

### Example 4 (preparation of resin composition)

6 parts by weight of the powder sample 3 prepared in Example 2, 100 parts by weight of polypropylene and 12 parts by weight of talc were mixed together and melt kneaded together at about 180°C by using a double-screw extruder to prepare a pellet. A test specimen was produced from the obtained pellet at about 200°C by means of an injection molding machine to measure its physical properties. The results are shown in Table 2.

### Comparative Example 1 (preparation of resin composition)

6 parts by weight of the powder sample 1 (not coated with colloidal silica) prepared in Example 1, 100 parts by weight of polypropylene and 12 parts by weight of talc were mixed together and melt kneaded together at about 180°C by using a double-screw extruder to prepare a pellet. A test specimen was produced from the obtained pellet at about 200°C by means of an injection molding machine to measure its physical properties. The results are shown in Table 2.

### Comparative Example 2 (preparation of resin composition)

100 parts by weight of polypropylene and 18 parts by weight of talc were mixed together and melt kneaded together at about 180°C by using a double-screw extruder to prepare a pellet. A test specimen was produced from the obtained pellet at about 200°C by means of an injection molding machine to measure its physical properties. The results are shown in Table 2.

**Table 1 (analytical values of powder samples)**

| | Powder sample 1 | Powder sample 2 | Powder sample 3 |
|---|---|---|---|
| Coated or not coated with colloidal silica | not coated | coated | coated |
| Long diameter (width) (µm) | 3.8 | 5.5 | 6.0 |
| Thickness (µm) | 0.06 | 0.12 | 0.15 |
| Aspect ratio (µm) | 63 | 46 | 40 |
| BET (m²/g) | 6.9 | 9.9 | 10.8 |
| Acid resistance (min) | 10 | - | 100 |

It is understood from Table 1 that particles obtained by coating the surface of magnesium hydroxide having a high aspect ratio with colloidal silica have a high aspect ratio.

Further, acid resistance becomes about 10 times longer by coating with colloidal silica.

**Table 2**

| | Example 3 | Example 4 | Comparative Example 1 | Comparative Example 2 |
|---|---|---|---|---|
| Mixing ratio of powder sample 2 (parts by weight) | 6 | - | - | - |
| Mixing ratio of powder sample 3 (parts bv weight) | - | 6 | - | - |
| Mixing ratio of powder sample 1 (parts bv weight) | - | - | 6 | - |
| Mixing ratio of polypropylene (parts bv weight) | 100 | 100 | 100 | 100 |
| Mixing ratio of talc (parts bv weiqht) | 12 | 12 | 12 | 18 |
| Glossiness | 38.2 | 35.6 | 51.0 | 43.7 |
| Flexural modulus (MPa) | 1825.6 | 1776.4 | 1800 | 1688.3 |
| Izod impact test (kJ/m²) | 18.9 | 19.7 | 24.4 | 15.3 |

It is understood from Table 2 that the glossiness of a resin mixed with coated magnesium hydroxide is lower than that of a resin mixed with magnesium hydroxide not coated with colloidal silica or talc.

The flexural modulus and impact resistance of a resin mixed with coated magnesium hydroxide are higher than those of a resin mixed with only talc regardless of coating with colloidal silica.

### Effect of the Invention

The coated magnesium hydroxide of the present invention can provide not only flame retardancy inherent in magnesium hydroxide but also more excellent mechanical properties such as flexural modulus and impact resistance than talc which has been used as a resin reinforcing material for auto parts when it is kneaded with a resin. Since it has low glossiness and acid resistance at the same time, it may be used in auto interior parts which require low glossiness and exterior parts which require coatability and acid resistance.

## Claims

1. Coated magnesium hydroxide comprising magnesium hydroxide and colloidal silica coating the surface thereof, wherein
(A) the coating amount of colloidal silica is 0.1 to 20.0 wt% in terms of SiO₂ based on 100 wt% of magnesium hydroxide; and
(B) the coated magnesium hydroxide has a long diameter (width) of 0.5 to 20 µm, a thickness of 0.01 to 0.5 µm and an aspect ratio of not less than 10.

2. The coated magnesium hydroxide according to claim 1 which has an aspect ratio of not less than 30.

3. A resin composition comprising 100 parts by weight of a resin and 0.1 to 200 parts by weight of the coated magnesium hydroxide of claim 1.

4. A molded article comprising the resin composition of claim 3.

5. A process for producing the coated magnesium hydroxide of claim 1, comprising the steps of:
(i) preparing slurry containing magnesium hydroxide having a long diameter (width) of 0.5 to 20 µm, a thickness of 0.01 to 0. 5 µm and an aspect ratio of not less than 10 dispersed in water; and
(ii) adding an aqueous solution of colloidal silica to the slurry to ensure that the amount of colloidal silica becomes 0.1 to 20 wt% in terms of SiO₂ based on 100 wt% of magnesium hydroxide.
